# EUROPÄISCHE PATENTSCHRIFT

(11) **EP 2 160 581 B1**
(45) Veröffentlichungstag und Bekanntmachung des Hinweises auf die Patenterteilung: **28.03.2018**
(21) Anmeldenummer: 08761251.1
(22) Anmeldetag: 20.06.2008
(51) Int. Cl.: G01L 1/20

(54) **DEHNUNGS-SENSOR UND SENSOR-ANORDNUNG HIERZU**
EXPANSION SENSOR AND CORRESPONDING SENSOR ARRANGEMENT
CAPTEUR DE DILATION ET DISPOSITIF DE DÉTECTION CORRESPONDANT

(30) Priorität: 02.07.2007 DE 102007030680
(43) Veröffentlichungstag der Anmeldung: 10.03.2010
(73) Patentinhaber: Contitech AG, 30165 Hannover (DE); Reck, Siegfried, 31582 Nienburg (DE)
(72) Erfinder: HERRMANN, Wolfram, 31515 Wunstorf (DE); JUNGRICHTER, Frank, 34497 Korbach (DE); SOSTMANN, Stefan, 30855 Langenhagen (DE); BORVITZ, Dieter, 30519 Hannover (DE); GAWINSKI, Hubertus, 31867 Lauenau (DE)
(74) Vertreter: Finger, Karsten
(86) Internationale Anmeldenummer: PCT/EP2008/057833
(87) Internationale Veröffentlichungsnummer: WO 2009/003853

(56) Entgegenhaltungen:
- DE-C1- 10 025 504
- US-A1- 2006 184 067

## Beschreibung

Die Erfindung betrifft einen Sensor als integriertes Bauteil eines Artikels, insbesondere eines elastischen Artikels, wobei der Sensor einen polymeren Werkstoff umfasst.
Ein Sensor der eingangs genannten Art ist aus der Offenlegungsschrift WO 00/65533 A1 bekannt. In eine Matrix, insbesondere aus Kunststoff, Gummi oder gummiähnlichem Werkstoff, sind detektierbare Materialteilchen eingebettet. Diese Materialteilchen sind insbesondere Metallstückchen, Permanentmagnete oder Kunststoffteilchen. Auch magnetisierbares Material, insbesondere Ferritmaterial, kann in die Matrix eingemischt werden. Die Ausbildung dieser Matrix erfolgt dabei insbesondere in Streifenform. Diese Sensor-Matrix ist ein Teil einer Einrichtung für die Codierung, d.h. Kennzeichnung und Adressierung, sowie für die Markierung von Gegenständen und kommt insbesondere für folgende elastische Artikel zur Anwendung:
- Fördergurte (EP 1 053 447 B1, EP 1 660 393 B1)
- Schläuche (US 5 051 034)
- Reifen (DE 196 20 582 A1)
Hinsichtlich der Einrichtungen unter Einsatz von Sensoren wird insbesondere auf folgende Druckschriften verwiesen: DE 100 25 504 C1, WO 03/076953 A2, WO 2007/109896 A1, US 5 802 030 und US2006/0184067. Im Rahmen einer Weiterentwicklung besteht die Aufgabe darin, einen Sensor bereitzustellen, der einerseits die Standard-Eigenschaften eines polymeren Werkstoffes beibehält und andererseits empfindlich auf Dehnungsänderungen und Anregungsfrequenzen reagiert, und zwar unter Erfassung des Belastungszustandes eines Artikels, um so eine Überlastung erkennen zu können oder einen Ausfall während des Betriebes vorherzusagen.

Gelöst wird diese Aufgabe dadurch, dass der polymere Werkstoff mit elektrisch leitfähigen Zusätzen versehen ist und dabei als Dehnungs-Sensor wirkt, indem er statische und dynamische Dehnungen des Artikels in Relation zu den wirkenden Kräften misst und zudem die Veränderungen des polymeren Werkstoffes aufgrund der statischen und dynamischen Dehnungen des Artikels über die Zeit verfolgt.

Hinsichtlich des polymeren Werkstoffes, der mit elektrisch leitfähigen Zusätzen versehen ist, kommen insbesondere folgende Varianten zum Einsatz:

### Variante A

Der polymere Werkstoff ist ein elastomerer Werkstoff auf der Basis einer vulkanisierten Kautschukmischung, die eine unverschnittene Kautschukkomponente oder einen Kautschukkomponentenverschnitt, elektrisch leitfähige Zusätze und übliche Mischungsingredienzien umfasst. Als Kautschukkomponenten sind insbesondere zu nennen:
Ethylen-Propylen-Mischpo lymerisat (EPM)
Ethylen-Propylen-Dien-Mischpo lymerisat (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Siliconkautschuk (MVQ)
Fluorierter Methylsiliconkautschuk (FFPM)
Perfluorcarbon-Kautschuk (FFKM)
Polyurethan (PU)

Auch der Einsatz eines Verschnittes, insbesondere in Verbindung mit einem der vorgenannten Kautschuktypen, ist möglich.

Von besonderer Bedeutung sind: EPM, EPDM, HNBR, CR, NR, FKM oder ein Verschnitt aus NR und BR.

Die elektrisch leitfähigen Zusätze sind in einer Menge von 3 bis 100 phr (per hundred rubber) vorhanden, verbunden mit folgender Differenzierung:
- Weisen die elektrisch leitfähigen Zusätze einen Leitfähigkeitsbereich von 10² bis 10⁶ S/cm auf, so sind 3 bis 50 phr, insbesondere 3 bis 30 phr, ausreichend.
- Besitzen die elektrisch leitfähigen Zusätze einen Leitfähigkeitsbereich von 10⁻¹ bis 10² S/cm, so ist eine Menge von 20 bis 80 phr vorteilhaft.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Verarbeitungshilfsmittel und/oder ein Weichmacher und/oder ein Alterungsschutzmittel sowie gegebenenfalls weitere Zusatzstoffe. Diesbezüglich wird auf den allgemeinen Stand der Kautschukmischungstechnologie verwiesen.

### Variante B

Der polymere Werkstoff ist ein thermoplastisches Elastomer (TPE), das mit den elektrisch leitfähigen Zusätzen versehen ist und übliche Mischungsingredienzien (DE 100 04 632 A1) umfasst.

Zur Anwendung kommen insbesondere thermoplastische Elastomere auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V). Auch ein Verschnitt aus einem thermoplastischen Kunststoff und einem mindestens teilvernetzten Kautschuk (z.B. EPDM) ist möglich.

Die elektrisch leitfähigen Zusätze sind in einer Menge von 0,5 bis 20 Gew.-%, insbesondere 1 bis 15 Gew.-%, insbesondere wiederum 1 bis 10 Gew.-%, vorhanden. Zumeist sind dabei Mengen von 1 bis 3 Gew.-% ausreichend.

### Variante C

Der polymere Werkstoff ist ein Kunststoff, der mit den elektrisch leitfähigen Zusätzen versehen ist.

Eingesetzt wird hier insbesondere ein fluorhaltiger Kunststoff, insbesondere wiederum Polytetrafluorethylen (PTFE), Polyvinylfluorid (PVF), Polyvinylidenfluorid (PVDF) oder deren chemischen Modifikationen.

Hinsichtlich des Mengenanteils an elektrisch leitfähigen Zusätzen gilt hier das gleiche wie bei der Variante B.

Unabhängig von den oben genannten polymeren Werkstoffvarianten zeichnet sich der polymere Dehnungs-Sensor durch ein Füllstoffkonzept auf der Basis elektrisch leitfähiger Zusätze aus. Diese sind insbesondere Metalle und/oder Metallverbindungen und/oder Ruß und/oder Kohlenstoff-Fasern und/oder Graphit und/oder Nanotubes und/oder ionische Flüssigkeiten. Diese Materialien sind dazu geeignet, ein Dielektrikum gezielt zu beeinflussen und auf das Messprinzip hin zu optimieren, das die eigentliche Messgrundlage darstellt.

Dabei werden durch Dehnung die Füllstoff-Füllstoff-Wechselwirkungen abhängig von der dynamischen Belastung (Amplitude, Frequenz, Zeit) reduziert, die nach Unterbrechung der mechanischen Belastung nur teilweise wieder rekombinieren. Dadurch wirkt das Material als dehnungsabhängiger (veränderlicher) Widerstand. Durch die nur teilweise Rekombination der Füllstoff-Füllstoff-Wechselwirkung kann die Änderung im Material über die Zahl der Belastungszyklen verfolgt werden. Zusätzlich dazu ist die Relaxationszeit nach Aufheben der mechanischen Verformung stark von der vorausgegangenen Versorgungsamplitude abhängig. Die Kombination aus diesen beiden Effekten eröffnet die Möglichkeit, einen Dehnungs-Sensor aufzubauen, der den mechanischen Belastungs- und Alterungszustand bei Polymeren erfasst.

Im Folgenden werden vorteilhafte Spezifikationen von elektrisch leitfähigen Zusätzen aufgeführt:
- Die Metalle liegen als Metallpulver und/oder als Metallfasern vor. Dabei beträgt bei Metallfasern in Form von Kurzschnittfasern die Faserlänge insbesondere 1 bis 6 mm. Bei Einsatz von Metallen kann auch ein in ein Gewebe eingebetteter metallischer Festigkeitsträger zur Anwendung gelangen.
- Bei Einsatz von Metallverbindungen, beispielsweise Metallsalzen, beispielsweise Eisenchlorid (FeCl₃), oder Metalloxiden, beispielsweise indiumdotiertes Zinkoxid (ITO), ist die Pulverform vorrangig.
- Die elektrisch leitfähigen Zusätze sind Ruß und/oder Kohlenstoff-Fasern. Der Ruß ist dabei ein Leitruß und/oder Standardruß (Normalruß). Bei den Kohlenstoff-Fasern beträgt die Faserlänge 50 bis 150 µm. Bei Verwendung von Kohlenstoff-Fasern sind bei einer Faserlänge von 3 bis 6 mm auch Kurzschnittfasern möglich.
- Die Nanotubes bestehen aus Kohlenstoff (US 7 338 648 B2) mit der Kurzbezeichnung CNT. Nanotubes sind Röhren mit schichtartigem Aufbau und wenigen Nanometern Durchmesser.
- Bei Einsatz von ionischen Flüssigkeiten, die aus einem kationischen und anionischen Teil bestehen, kommen beispielsweise zum Einsatz:
   - Kationen:: Dialkylimidazolium, Alkylpyridinium, Tetraalkylammonium, Tetraalkylphoshonium
   - Anionen:: Chlorid, Bromid, Tetrafluoroborat, Tetrachloroferrat(III), Hexafluorophosphat, Alkylsulfonat
- Die elektrisch leitfähigen Zusätze bestehen aus einem Polymer, einem Polymerblend oder einer Polymermischung mit elektrisch leitfähigen funktionellen Gruppen, die insbesondere Carbonylgruppen, insbesondere wiederum Estergruppen, sind. Eingesetzt wird/werden hier insbesondere ein Polyethylenglykolester und/oder ein Polyethylenglykolcarbonsäureester.

Der Einsatz von leitfähigen Rußen hat sich dabei als besonders vorteilhaft gegenüber anderen Lösungen gezeigt, da das daraus gebildete Füllstoff-Netzwerk in der Lage ist, adäquate Strommengen zu führen und sehr empfindlich auf Dehnungsänderungen zu reagieren. Hinzu kommt, dass es bei Austausch gegen Standardrußen in Polymer-Rezepturen, insbesondere in Kautschukmischungs-Rezepturen, kaum zu signifikanten Veränderungen der physikalischen Eigenschaften führt.

Werden neben einem leitfähigen Ruß zusätzlich Kohlenstoff-Fasern eingesetzt, so kann die Änderung der Leitfähigkeit weiter optimiert werden. Die Relaxationszeiten werden deutlich verkürzt, so dass auch schnelle dynamische Verformungen gut zu erfassen sind. Darüber hinaus wird durch diese Kombination erreicht, dass die Abnahme der Leitfähigkeit mit zunehmender Verformungsamplitude reduziert wird, so dass größere Verformungswege leichter erfasst werden können.

Die elektrisch leitfähigen Zusätze sind innerhalb des polymeren Werkstoffes gleichmäßig verteilt. Außerdem können diese zusätzlich noch mit einer niedermolekularen Verbindung belegt sein. Die Belegung erfolgt dabei insbesondere mit einem Wachs und/oder einem Fett und/oder einem Öl und/oder mit Stearinsäure und/oder einem Alterungsschutzmittel und/oder einem kurzkettigen Polymer.

Die durch die leitfähigen Zusätze erhaltenen polymeren Werkstoffe lassen sich bezüglich ihrer Leitfähigkeit unterscheiden in:
- gut leitfähige Werkstoffe mit einem Leitfähigkeitsbereich von 10° bis 10² S/cm (z.B. metallfasergefüllte Polymerwerkstoffe);
- mittel leitfähige Werkstoffe mit einem Leitfähigkeitsbereich von 10⁻³ bis 10⁰ S/cm (z.B. leitfähige Ruß-Compounds);
- antistatisch ausgerüstete Werkstoffe mit einem Leitfähigkeitsbereich von 10⁻⁶ bis 10⁻³ S/cm.

Die mittel bis gut leitfähigen Werkstoff eignen sich zu Leitfähigkeitsmessungen unabhängig von der Frequenz (Gleichstromleitfähigkeit sowie dielektrische Eigenschaften). Die mittel leitfähigen bis antistatischen Werkstoffe eignen sich dagegen bevorzugt zur Charakterisierung bei höheren Frequenzen (dielektrische Eigenschaften).

Im Folgenden werden auf der Basis der Werkstoffvariante A drei Mischungsbeispiele genannt.

### Mischungsbeispiel 1

Eine Kautschukmischung auf Basis von 100 phr schwefelmodifiziertem Chloropren-Kautschuk enthält leitfähige Zusätze in einer Gesamtmenge von 30 phr, nämlich:
- 25 phr Leitruß (erhältlich beispielsweise unter der Handelsbezeichnung Ensaco™ 260G von der Firma Timcal oder Katchen Black EC von der Firma Akzo Nobel; BET-Oberfläche größer als 120 m²/g; DBP-Adsorption größer 90 cm³/100 g) und
- 5 phr Kohlenstoff-Fasern (erhältlich beispielsweise unter der Handelsbezeichnung Tenax™ A383 mit einer Faserlänge von 50 bis 150 µm von der Firma Toho Tenax Europe GmbH oder von SGL-Carbon Group in Form von Kurzschnittfasern mit einer Faserlänge von 3 bis 6 mm).

Dieser Kautschuk wurde mit den üblichen Mischungsingredienzien (z.B. Wachse, Alterungsschutzmittel) mit Hilfe von Metalloxiden (Gemisch aus MgO und ZnO) vernetzt. Man erhält ein Vulkanisat mit einer Härte von 65 Shore A (nach DIN 53505) und einer Reißdehnung von 750 % (nach DIN 53504). Der elektrische Durchgangswiderstand nach DIN IEC 93 beträgt 13 Ω.

Betrachtet man die Gleichstromleitfähigkeit dieses Materials bei einer Spannung von 10 Volt an einem Streifen der Dimension 50 x 12 x 2 mm (Länge x Breite x Stärke), so ergibt sich in Abhängigkeit von der Dehnung folgendes Bild:
80 kΩ bei O % Dehnung; 120 kΩ bei 10 % Dehnung; 200 kΩ bei 20 % Dehnung;
300 kΩ bei 35 % Dehnung; 550 kΩ bei 50 % Dehnung; 1,1 MΩ bei 75 % Dehnung; 2,0 MΩ bei 100 % Dehnung.

Nach Entlastung erholt sich die Leitfähigkeit auf nahezu Anfangsniveau in sehr kurzer Zeit. Dieses Eigenschaftsbild macht das Material sehr gut geeignet als Sensormaterial zum Verfolgen von sehr schnellen dynamischen Verformungen, beispielsweise als Lastwechselzähler.

### Mischungsbeispiel 2

Eine Kautschukmischung auf Basis eines Verschnittes aus 40 phr Naturkautschuk und 60 phr Butadien-Kautschuk enthält als leitfähigen Zusatz 65 phr eines Standardrußes, nämlich:
- ein Ruß mit einer CTAB-Oberfläche von 42 m²/g und einer DBP-Adsorption von 121 ml/100 g, beispielsweise N550.

Dieser Kautschukverschnitt wurde mit den üblichen Mischungsingredienzien (z.B. Wachse, Alterungsschutzmittel) mit Hilfe von Schwefel (sulfenamidbeschleunigt und ZnO-aktiviert) vernetzt. Man erhält ein Vulkanisat mit einer Härte von 60 Shore A (nach DIN 53505) und einer Reißdehnung von 500 % (nach DIN 53504). Der elektrische Durchgangswiderstand nach DIN IEC 93 beträgt 1,2 kΩ.

Betrachtet man die Polarisierbarkeit dieses Materials in Wechselstromleitfähigkeitsmessungen bei 200 kHz, so ergibt sich abhängig vom Ermüdungsgrad des Materials folgendes Bild:
Realteil der relativen Permittivität (εᵣ'), gemessen an einer Probengeometrie von 5 mm Durchmesser und 2 mm Stärke, angelegte Spannung 500 mV, Frequenz 200 kHz,
Messgerät Agilent 4294A-Precision Impedance Analyzer
(εᵣ') = 0,32 an frischer Probe
(εᵣ') = 0,045 nach 1/3 der dynamisch maximalen Lastwechselzahl
(εᵣ') = 0,032 nach 2/3 der dynamisch maximalen Lastwechselzahl
(εᵣ') = 0,023 nach 3/3 der dynamisch maximalen Lastwechselzahl

Die dynamische Ermüdung wurde in Anlehnung an DIN EN ISO 7854 auf einer Biegeprüfmaschine nach ISO 132 durchgeführt (Prüfkörper: 120 x 40 mm, Biegefrequenz 5,0 Hz). Die maximale Lastwechselzahl wird durch das Auftreten von Rissen und die damit verbundene Zerstörung des Prüfkörpers bestimmt. Sie lag in diesen Beispiel bei 5 Mio. Biegezyklen.

Die empfindliche Verfolgung der dielektrischen Eigenschaft über eine sehr lange Belastungszeit macht dieses Ausführungsbeispiel besonders geeignet als Sensormaterial für eine Langzeitermüdungsverfolgung. Der Ermüdungszustand des Materials und der voraussichtliche Ausfall lassen sich so zuverlässig hervorsagen, beispielsweise während des Betriebes. Daneben kann dieses Material auch zum Verfolgen der Zahl der Lastwechsel genutzt werden.

### Mischungsbeispiel 3

Eine Kautschukmischung auf Basis 100 phr Naturkautschuk enthält leitfähige Zusätze in einer Gesamtmenge von 25 phr, nämlich:
- 15 phr Leitruß (erhältlich beispielsweise unter der Handelsbezeichnung Ensaco™ 260G von der Firma Timcal oder Katchen Black EC von der Firma Akzo Nobel; BET-Oberfläche größer als 120 m²/g; DBP-Adsorption größer 90 cm³/100 g) und
- 10 phr Nanotubes (erhältlich beispielsweise unter der Handelsbezeichnung NC-7000 der Firma Nanocyl, Belgien).

Dieser Kautschuk wurde mit den üblichen Mischungsingredienzien (z.B. Wachse, Alterungsschutzmittel) mit Hilfe von Schwefel (sulfenamidbeschleunigt und ZnO-aktiviert) vernetzt. Man erhält ein Vulkanisat mit einer Härte von 67 Shore A (nach DIN 53505) und einer Reißdehnung von 400 % (nach DIN 53504). Der elektrische Durchgangswiderstand nach DIN IEC 93 beträgt 3,6 Ω.

Dieses Material zeichnet sich durch extrem gute Gleichstromleitfähigkeit bei gleichzeitig hoher Wechselstromleitfähigkeit aus. Hinzu kommt, dass die dielektrischen Eigenschaften über einen Frequenzbereich von 100 Hz bis 500 kHz im Dehnbereich bis zu 200 % Dehnung als frequenz- und dehnungsunabhängig (also konstant) gefunden werden konnten.

Diese Eigenschaften machen das Material besonders geeignet als Elektrodenmaterial für dynamische und speziell dielektrische Messungen während dynamischer Belastung am Elastomerprodukt.

Das hier vorgestellte neue Sensorkonzept, wie in den Beispielen gezeigt, hat den Vorteil, dass das Sensormaterial jeweils ganz speziell auf den Anwendungsfall abstimmbar ist, beispielsweise bezüglich Härte, Leitfähigkeit und Polymersystem.

Auch besteht ein wesentlicher Vorteil darin, dass ein Dehnungs-Sensor auf elastomerer Basis die Möglichkeit bietet, direkt im Rahmen der Vulkanisation mit dem Artikel verbunden zu werden, so dass keine zusätzlichen Störstellen oder Verklebungen eintreten.

Darüber hinaus bleibt festzustellen, dass auch polymere Leiter zur Kontaktierung eingesetzt werden können, wie gezeigt in dem Mischungsbeispiel 3, beispielsweise durch Elastomere, die mit 3 bis 10 phr Kohlenstoff-Nanotubes gefüllt sind. Diese Leiter können ebenfalls im Rahmen der Vulkanisation im Artikel ohne Fehlstelle eingebettet werden. Statt eines polymeren Leiters können zur Kontaktierung auch gut leitfähige Festigkeitsträger (z.B. mit in Gewebe eingearbeiteten Metallfilamenten) zum Einsatz kommen.

Der polymere Dehnungs-Sensor kann Bauteil sein:
- eines Schlauches (Kraftfahrzeugschlauch, Schwimmschlauch etc.);
- eines Luftfederbalges (Axialbalg, Kreuzlagenbalg) oder Kompensators;
- eines Riemens, insbesondere Antriebsriemens (Flachriemen, Keilriemen, Keilrippenriemen, Zahnriemen);
- eines Fördergurtes (Textilgurt, Stahlseilgurt) und einer Fördergurtverbindung;
- eines Reifens;
- eines Stoffes, insbesondere eines Behälterstoffes;
- einer Kraftfahrzeug-Innenraumverkleidung, insbesondere eines Airbag-Systems.

Neben der Nutzung als Dehnungs-Sensor zum Verfolgen des Belastungszustandes und der Belastungsgeschichte eines Artikels sind auch Anwendungen in Überlastkontrollen, Kontrollen zum Anzugmoment von Befestigungen/Verschraubungen und drucksensitiven "Schaltungen" (zum Beispiel in Lichtsteuerungen oder Musik-Tasteninstrumenten) realisierbar.

Der vorgenannte Dehnungs-Sensor in all seinen Werkstoffvarianten ist letztlich ein Bauteil einer Sensor-Anordnung, insbesondere im Rahmen folgender Bauteilkombination:
- Der Dehnungs-Sensor bildet mit einem Micro-Controller einen Gesamtsensor. Der Micro-Controller ist dabei zusätzlich mit einem Speicher versehen.
- Die Sensor-Anordnung ist mit einem Festwiderstand versehen.
- Die Sensor-Anordnung ist mit einem Analog/Digital-Wandler ausgestattet.
- Die Sensor-Anordnung weist eine Funk-Schnittstelle auf.
- Die Sensor-Anordnung ist mit einer Strom-/Spannungsquelle versehen, die gesteuert ist.
- Die Sensor-Anordnung ist mit einer Energieversorgung ausgestattet, die wiederum einen Gleichrichter und einen Energiespeicher umfasst. Die Energieversorgung erfolgt galvanisch, über Feldkopplung oder mit Hilfe einer eigenen Piezogenerator-Einheit.
- Die Sensor-Anordnung ist mit einer Koppelspule versehen, die bei typischen ISM-Frequenzen, insbesondere bei 125 kHz, arbeitet.
- Die Sensor-Anordnung ist mit einer Empfangseinheit versehen, insbesondere in Form einer Funk-Antenne.
- Schließlich ist die Sensor-Anordnung mit einer Auswerteeinheit versehen.

Im Zusammenhang mit der Figurenbeschreibung 2 wird diese Sensor-Anordnung noch detaillierter vorgestellt.

Die Erfindung wird nun anhand von Ausführungsbeispielen unter Bezugnahme auf schematische Zeichnungen erläutert. Es zeigen:
- Fig. 1: eine Skizzierung eines Widerstands-Dehnungs-Verlaufes;
- Fig. 2: eine Sensor-Anordnung unter Einsatz eines Dehnungs-Sensors;
- Fig. 3: eine Luftfeder-Anordnung.

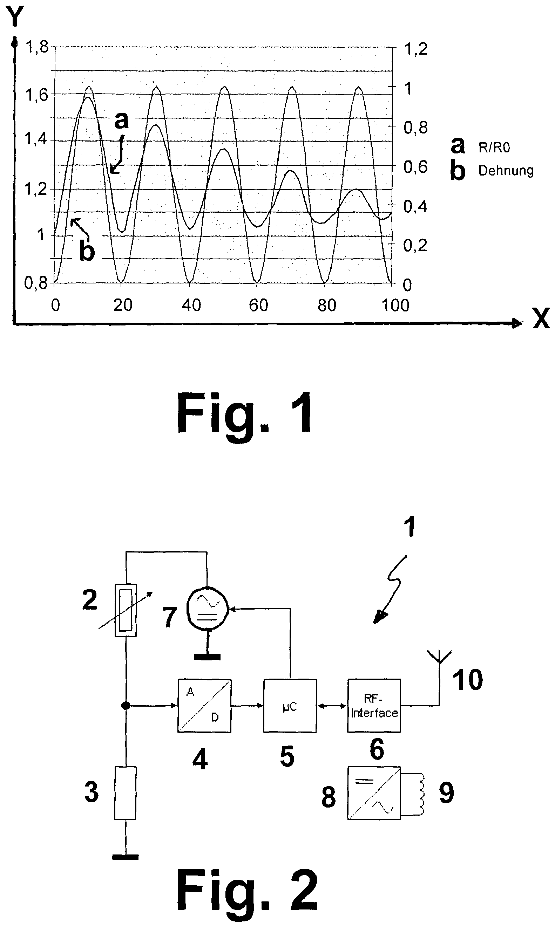

Mit der Skizzierung des Widerstands-Dehnungs-Verlaufs nach Fig.1 mit der Ordinate Y (Widerstand) und der Abszisse X (Belastungszyklen) ist folgender Sachverhalt verbunden:

Durch die Dehnung eines elastischen Bauteiles, beispielsweise eines Luftfederbalges, wird die Füllstoff-Füllstoff-Wechselwirkung abgebaut, die nach Unterbrechung der mechanischen Belastung nur teilweise wieder rekombiniert. Dadurch wirkt das Material als dehnungsabhängiger (veränderlicher) Widerstand. Durch die nur teilweise Rekombination der Füllstoff-Füllstoff-Wechselwirkung kann die Änderung im Material über die Zahl der Belastungszyklen verfolgt werden. Zusätzlich dazu ist die Relaxationszeit nach Aufheben der mechanischen Verformung stark von der vorausgegangenen Verformungsamplitude abhängig. Die Kombination aus diesen beiden Effekten eröffnet die Möglichkeit, einen Dehnungs-Sensor aufzubauen, der den mechanischen Belastungs- und Alterungszustand bei Polymeren erfasst. Dieser Sachverhalt wird hier anhand der beiden Kurvenverläufe a (R/R0) und b (Dehnung) in der Fig. 1 schematisch dargestellt.

Fig. 2 zeigt eine vorteilhafte Sensor-Anordnung 1 unter Einsatz des erfindungsgemäßen Dehnungs-Sensors 2.

Der polymere Dehnungs-Sensor 2 in einem bevorzugten Ausführungsbeispiel ist dabei streifenförmig ausgebildet. Der Streifen wird dabei in geeigneter Weise kontaktiert, beispielsweise mittels eines polymeren Leiters mit eingemischten Kohlenstoff-Nanotubes, und mit einem Festwiderstand 3 in Reihe geschaltet. Diese Reihenschaltung wird mit einer gesteuerten Strom-/Spannungsquelle 7 bestromt.

In günstigen Fällen kann auch das Elastomermaterial des Artikels selbst so modifiziert werden, dass es direkt als Sensormaterial zu nutzen ist.

Der dehnungsabhängige Widerstand moduliert den Strom, wodurch am Festwiderstand 3 eine veränderliche Spannung abfällt, die proportional zur Widerstandsänderung im Dehnungs-Sensor 2 und damit auch proportional zur Dehnung des Dehnungs-Sensors ist.

Mit Rücksicht auf die nur teilweise Rekombination des Füllstoff-Füllstoff-Netzwerkes ist ein Speicher für die zuletzt erzielten Messwerte vorteilhaft (Niveauspeicherung). Die Auswertung des elektrischen Signals übernimmt ein Micro-Controller 5 mit Analog/Digital-Wandler 4 und integriertem Speicher. Die Messdaten können dabei galvanisch oder alternativ über Funk oder über Feldkopplung an die Auswerteeinheit übertragen werden.

Mit der gesteuerten Strom-/Spannungsquelle 7 ist es möglich, auch komplexe Anregungssignale zu erzeugen, wie zum Beispiel hochfrequente Wechselspannungen, um so auch das Relaxationsverhalten und/oder die dielektrischen Eigenschaften verfolgen zu können.

Die Energieversorgung 8 des Gesamtsensors aus Dehnungs-Sensor 2 und Micro-Controller 5 erfolgt dabei entweder galvanisch, über Feldkopplung oder mit Hilfe einer eigenen Piezogenerator-Einheit.

Als weitere vorteilhafte Möglichkeit kann ein zusätzlicher Vergleichs-Sensor, beispielsweise in Form eines Sensorstreifens, auch außerhalb des dynamisch belasteten Bereiches ergänzt werden, der einen ständigen Vergleich zwischen belasteter und unbelasteter Probe erlaubt. Dies kann dazu dienen, Temperatureffekte durch die dynamische Last zu berücksichtigen und in die Auswerteeinheit mit einzuspeisen.

Auch eine rein statische Alterung des Materials führt zu Veränderung in den Polymer-Füllstoff und Füllstoff-Füllstoff-Wechselwirkung. Durch den Vergleichssensor können auch diese Effekte berücksichtigt werden. Darüber hinaus kann die vorgeschlagene Anordnung dann auch dazu genutzt werden, um eine statische Alterung zu erfassen.

Dadurch dass die dehnungsabhängigen Widerstandsänderungen des Sensormaterials und deren Relaxation einer Temperaturabhängigkeit unterliegt, kann der Dehnungs-Sensor 2 prinzipiell auch zur Temperaturmessung genutzt werden.

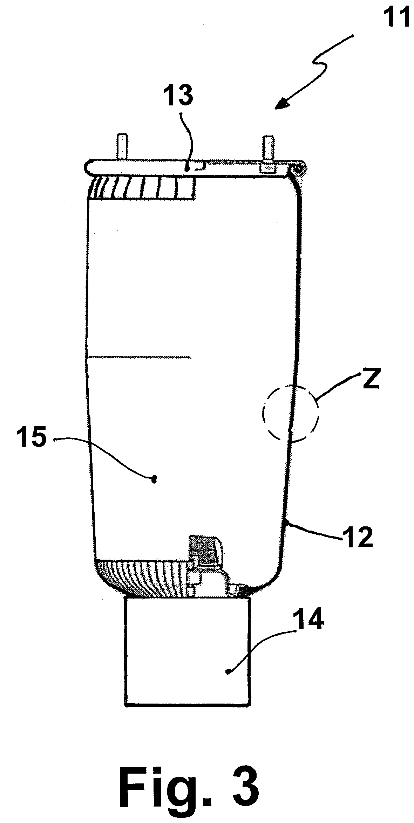

Fig. 3 zeigt eine Luftfeder-Anordnung 11, umfassend einen Luftfederbalg 12 sowie die beiden Anschlussbauteile Deckel 13 und Abrollkolben 14, und zwar unter Ausbildung einer volumenelastischen Luftkammer 15. Der Luftfederbalg besteht aus einem polymeren Werkstoff mit elastischen Eigenschaften und ist insbesondere mit einem eingebetteten Festigkeitsträger versehen. Hinsichtlich Details wird auf den allgemeinen Stand der Luftfedertechnik verwiesen.

Nach einer Variante kann der gesamte polymere Werkstoff des Luftfederbalges 12 mit elektrisch leitfähigen Zusätzen versehen sein, so dass dann der gesamte Luftfederbalg den Dehnungs-Sensor bildet.

Nach einer weiteren Variante kann der polymere Werkstoff des Artikels im Rahmen wenigstens eines Segmentes im Luftfederbalgbereich Z mit elektrisch leitfähigen Zusätzen versehen sein. Innerhalb dieses Segmentes ist der Dehnungs-Sensor insbesondere streifenförmig ausgebildet. Der Dehnungs-Sensor kann dabei ein stoffschlüssiges Bauteil des Luftfederbalges 12 oder als zusätzliches Bauteil auf oder insbesondere in dem Luftfederbalg verbaut sein. Bei Verwendung des Dehnungs-Sensors als zusätzliches Bauteil wäre auch eine Austauschbarkeit realisierbar.

### Bezugszeichenliste

### (Teil der Beschreibung)

- 1: Sensor-Anordnung
- 2: Dehnungs-Sensor
- 3: Festwiderstand
- 4: Analog/Digital-Wandler
- 5: Micro-Controller mit Speicher
- 6: Funk-Schnittstelle
- 7: gesteuerte Strom-/Spannungsquelle
- 8: Energieversorgung (Gleichrichter und Energiespeicher)
- 9: Koppelspule
- 10: Empfangseinheit (Funk-Antenne)
- 11: Luftfeder-Anordnung
- 12: Luftfederbalg
- 13: Deckel
- 14: Abrollkolben
- 15: volumenelastische Luftkammer
- X: Belastungszyklen
- Y: Widerstand
- Z: Luftfederbalgbereich mit Dehnungs-Sensor

## Patentansprüche

1. Sensor als integriertes Bauteil eines Artikels, insbesondere eines elastischen Artikels, wobei der Sensor einen polymeren Werkstoff umfasst, **dadurch gekennzeichnet, dass** der polymere Werkstoff mit elektrisch leitfähigen Zusätzen versehen ist und dabei als Dehnungs-Sensor (2) wirkt, indem er statische und dynamische Dehnungen des Artikels in Relation zu den wirkenden Kräften misst und zudem die Veränderungen des polymeren Werkstoffes aufgrund der statischen und dynamischen Dehnungen des Artikels über die Zeit verfolgt und wobei der polymere Werkstoff ein elastomerer Werkstoff auf der Basis einer vulkanisierten Kautschukmischung ist, die eine unverschnittene Kautschukkomponente oder einen Kautschukkomponentenverschnitt, elektrisch leitfähige Zusätze und übliche Mischungsingredienzien umfasst.

2. Sensor nach Anspruch 1, **dadurch gekennzeichnet, dass** der polymere Werkstoff ein elastomerer Werkstoff auf der Basis einer vulkanisierten Kautschukmischung ist, die eine unverschnittene Kautschukkomponente oder einen Kautschukkomponentenverschnitt, elektrisch leitfähige Zusätze und übliche Mischungsingredienzien umfasst.

3. Sensor nach Anspruch 2, **dadurch gekennzeichnet, dass** die elektrisch leitfähigen Zusätze in einer Menge von 3 bis 100 phr vorhanden sind.

4. Sensor nach einem der Ansprüche 1 bis 3, **dadurch gekennzeichnet, dass** die elektrisch leitfähigen Zusätze Metalle und/oder Metallverbindungen und/oder Ruß und/oder Kohlenstoff-Fasern und/oder Graphit und/oder Nanotubes und/oder ionische Flüssigkeiten sind.

5. Sensor nach einem der Ansprüche 1 bis 3, **dadurch gekennzeichnet, dass** die elektrisch leitfähigen Zusätze ein Polymer, ein Polymerblend oder eine Polymermischung mit elektrisch leitfähigen funktionellen Gruppen sind.

6. Sensor nach einem der Ansprüche 1 bis 5, **dadurch gekennzeichnet, dass** die elektrisch leitfähigen Zusätze mit einer niedermolekularen Verbindung belegt sind.

7. Sensor nach einem der Ansprüche 1 bis 6, **dadurch gekennzeichnet, dass** der Dehnungs-Sensor (2) mit einem Vergleichssensor kombiniert ist.

8. Sensor-Anordnung, **dadurch gekennzeichnet, dass** die Sensor-Anordnung (1) einen Dehnungs-Sensor (2) nach einem der Ansprüche 1 bis 7 umfasst.

9. Sensor-Anordnung nach Anspruch 8, **dadurch gekennzeichnet, dass** der Dehnungs-Sensor (2) mit einem Micro-Controller (5) einen Gesamtsensor bildet.

10. Sensor-Anordnung nach Anspruch 9, **dadurch gekennzeichnet, dass** der Micro-Controller (5) mit einem Speicher versehen **ist.**

11. Sensor-Anordnung nach einem der Ansprüche 8 bis 10, **dadurch gekennzeichnet, dass** die Sensor-Anordnung (1) mit einem Festwiderstand (3) versehen ist.

12. Sensor-Anordnung nach einem der Ansprüche 8 bis 11, **dadurch gekennzeichnet, dass** die Sensor-Anordnung (1) mit einem Analog/Digital-Wandler (4) versehen ist.

13. Sensor-Anordnung nach einem der Ansprüche 8 bis 12, **dadurch gekennzeichnet, dass** die Sensor-Anordnung (1) eine Funk-Schnittstelle (6) aufweist.

14. Sensor-Anordnung nach einem der Ansprüche 8 bis 13, **dadurch gekennzeichnet, dass** die Sensor-Anordnung (1) mit einer Strom-/Spannungsquelle (7) versehen ist.

15. Sensor-Anordnung nach Anspruch 14, **dadurch gekennzeichnet, dass** die Strom-/Spannungsquelle (7) gesteuert ist.

16. Sensor-Anordnung nach einem der Ansprüche 8 bis 15, **dadurch gekennzeichnet, dass** die Sensor-Anordnung (1) mit einer Energieversorgung (8) versehen ist.

17. Sensor-Anordnung nach Anspruch 16, **dadurch gekennzeichnet, dass** die Energieversorgung (8) einen Gleichrichter und einen Energiespeicher umfasst.

18. Sensor-Anordnung nach einem der Ansprüche 8 bis 17, **dadurch gekennzeichnet, dass** die Sensor-Anordnung (1) mit einer Koppelspule (9) versehen ist.

19. Sensor-Anordnung nach einem der Ansprüche 8 bis 18, **dadurch gekennzeichnet, dass** die Sensor-Anordnung (1) mit einer Empfangseinheit (10) versehen ist.

20. Sensor-Anordnung nach einem der Ansprüche 8 bis 19, **dadurch gekennzeichnet, dass** die Sensor-Anordnung (1) mit einer Auswerteeinheit versehen ist.

## Claims

1. Sensor as integrated component of an article, in particular an elastic article, where the sensor comprises a polymeric material, **characterized in that** the polymeric material is provided with electrically conductive additives and acts as strain sensor (2) by measuring static and dynamic strain in the article in relation to the forces acting on the article and in addition monitoring the changes in the polymeric material over time resulting from the static and dynamic strain in the article and the polymeric material is an elastomeric material based on a vulcanized rubber mixture which comprises an unblended rubber component or a rubber component blend, electrically conductive additives and customary mixture ingredients.

2. Sensor according to Claim 1, **characterized in that** the polymeric material is an elastomeric material based on a vulcanized rubber mixture which comprises an unblended rubber component or a rubber component blend, electrically conductive additives and customary mixture ingredients.

3. Sensor according to Claim 2, **characterized in that** the electrically conductive additives are present in an amount of from 3 to 100 phr.

4. Sensor according to any of Claims 1 to 3, **characterized in that** the electrically conductive additives are metals and/or metal compounds and/or carbon black and/or carbon fibers and/or graphite and/or nanotubes and/or ionic liquids.

5. Sensor according to any of Claims 1 to 3, **characterized in that** the electrically conductive additives are a polymer, a polymer blend or a polymer mixture having electrically conductive functional groups.

6. Sensor according to any of Claims 1 to 5, **characterized in that** the electrically conductive additives are coated with a low molecular weight compound.

7. Sensor according to any of Claims 1 to 6, **characterized in that** the strain sensor (2) is combined with a comparative sensor.

8. Sensor arrangement, **characterized in that** the sensor arrangement (1) comprises a strain sensor (2) according to any of Claims 1 to 7.

9. Sensor arrangement according to Claim 8, **characterized in that** the strain sensor (2) together with a microcontroller (5) forms a total sensor.

10. Sensor arrangement according to Claim 9, **characterized in that** the microcontroller (5) is provided with a memory.

11. Sensor arrangement according to any of Claims 8 to 10, **characterized in that** the sensor arrangement (1) is provided with a fixed resistance (3).

12. Sensor arrangement according to any of Claims 8 to 11, **characterized in that** the sensor arrangement (1) is provided with an analog/digital converter (4) .

13. Sensor arrangement according to any of Claims 8 to 12, **characterized in that** the sensor arrangement (1) has a radio interface (6).

14. Sensor arrangement according to any of Claims 8 to 13, **characterized in that** the sensor arrangement (1) is provided with a current/ potential source (7).

15. Sensor arrangement according to Claim 14, **characterized in that** the current/potential source (7) is controlled.

16. Sensor arrangement according to any of Claims 8 to 15, **characterized in that** the sensor arrangement (1) is provided with an energy supply (8).

17. Sensor arrangement according to Claim 16, **characterized in that** the energy supply (8) comprises a rectifier and an energy store.

18. Sensor arrangement according to any of Claims 8 to 17, **characterized in that** the sensor arrangement (1) is provided with a coupling coil (9).

19. Sensor arrangement according to any of Claims 8 to 18, **characterized in that** the sensor arrangement (1) is provided with a receiver (10).

20. Sensor arrangement according to any of Claims 8 to 19, **characterized in that** the sensor arrangement (1) is provided with a data processing unit.

## Revendications

1. Capteur sous la forme d'un élément constitutif intégré d'un article, notamment d'un article élastique, le capteur comprenant un matériau polymère, **caractérisé en ce que** le matériau polymère est pourvu d'additifs électriquement conducteurs et agit ici comme un capteur d'allongement (2) **en ce qu'**il mesure les allongements statiques et dynamiques de l'article en relation avec les forces agissantes et, en plus de cela, suit les modifications du matériau polymère dans le temps en raison des allongements statiques et dynamiques de l'article et le matériau polymère étant un matériau élastomère à base d'un mélange de caoutchouc vulcanisé qui comporte une composante de caoutchouc non coupée ou un coupage de composantes de caoutchouc, des additifs électriquement conducteurs et les ingrédients de mélange habituel.

2. Capteur selon la revendication 1, **caractérisé en ce que** le matériau polymère est un matériau élastomère à base d'un mélange de caoutchouc vulcanisé qui comporte une composante de caoutchouc non coupée ou un coupage de composantes de caoutchouc, des additifs électriquement conducteurs et les ingrédients de mélange habituel.

3. Capteur selon la revendication 2, **caractérisé en ce que** les additifs électriquement conducteurs sont présents dans une quantité de 3 à 100 phr.

4. Capteur selon l'une des revendications 1 à 3, **caractérisé en ce que** les additifs électriquement conducteurs sont des métaux et/ou des composés métalliques et/ou du noir de carbone et/ou des fibres de carbone et/ou du graphite et/ou des nanotubes et/ou des liquides ioniques.

5. Capteur selon l'une des revendications 1 à 3, **caractérisé en ce que** les additifs électriquement conducteurs sont un polymère, un composé de polymères ou un mélange de polymères avec des groupes fonctionnels électriquement conducteurs.

6. Capteur selon l'une des revendications 1 à 5, **caractérisé en ce que** les additifs électriquement conducteurs sont garnis avec un composé de faible poids moléculaire.

7. Capteur selon l'une des revendications 1 à 6, **caractérisé en ce que** le capteur d'allongement (2) est combiné avec un capteur de comparaison.

8. Arrangement de capteurs, **caractérisé en ce que** l'arrangement de capteurs (1) comporte un capteur d'allongement (2) selon l'une des revendications 1 à 7.

9. Arrangement de capteurs selon la revendication 8, **caractérisé en ce que** le capteur d'allongement (2) forme, avec un microcontrôleur (5), un capteur complet.

10. Arrangement de capteurs selon la revendication 9, **caractérisé en ce que** le microcontrôleur (5) est pourvu d'une mémoire.

11. Arrangement de capteurs selon l'une des revendications 8 à 10, **caractérisé en ce que** l'arrangement de capteurs (1) est pourvu d'une résistance fixe (3).

12. Arrangement de capteurs selon l'une des revendications 8 à 11, **caractérisé en ce que** l'arrangement de capteurs (1) est pourvu d'un convertisseur analogique/numérique (4).

13. Arrangement de capteurs selon l'une des revendications 8 à 12, **caractérisé en ce que** l'arrangement de capteurs (1) possède une interface radioélectrique (6).

14. Arrangement de capteurs selon l'une des revendications 8 à 13, **caractérisé en ce que** l'arrangement de capteurs (1) est pourvu d'une source de courant/tension (7).

15. Arrangement de capteurs selon la revendication 14, **caractérisé en ce que** la source de courant/tension (7) est commandée.

16. Arrangement de capteurs selon l'une des revendications 8 à 15, **caractérisé en ce que** l'arrangement de capteurs (1) est pourvu d'une alimentation en énergie (8).

17. Arrangement de capteurs selon la revendication 16, **caractérisé en ce que** l'alimentation en énergie (8) comporte un redresseur et un accumulateur d'énergie.

18. Arrangement de capteurs selon l'une des revendications 8 à 17, **caractérisé en ce que** l'arrangement de capteurs (1) est pourvu d'une bobine de couplage (9).

19. Arrangement de capteurs selon l'une des revendications 8 à 18, **caractérisé en ce que** l'arrangement de capteurs (1) est pourvu d'une unité de réception (10).

20. Arrangement de capteurs selon l'une des revendications 8 à 19, **caractérisé en ce que** l'arrangement de capteurs (1) est pourvu d'une unité d'interprétation.
